# EUROPEAN PATENT APPLICATION

(11) **EP 0 621 526 A1**
(43) Date of publication of application: **26.10.1994**
(21) Application number: 94302508.0
(22) Date of filing: 08.04.1994
(51) Int. Cl.: G06F 1/32

(54) **Method and apparatus for powering up and powering down peripheral elements**

(30) Priority: 21.04.1993 US 50818
(71) Applicant: WaferScale Integration Inc., Fremont California 94538 (US)
(72) Inventor: Cedar, Yorma, Cupertino, California CA 95014 (US); Pasternak, John H., Fremont, CA 94538 (US); Shubat, Alexander, Fremont, California CA 94539 (US)
(74) Representative: Kelvie, George Thomas

(57) **Abstract**

Apparatus and method for powering up and powering down at least one peripheral element of a microcontroller or a microprocessor. The apparatus transforms a generally very active control signal into a power up/power down signal for at least one peripheral element. Suitable control signals are the address latch enable (ALE), the WRITE signal and the READ signal.

## Description

### FIELD OF THE INVENTION

The present invention relates to automatic power down elements generally and to elements for automatically powering down peripheral devices of a power-downable microcontroller or microprocessor.

### BACKGROUND OF THE INVENTION

With the explosion of portable, battery operated systems such as portable computers, cellular telephones, pagers, hearing aides, etc., it has become important that each system consume as little power as possible so as to extend the life of the battery which powers it.

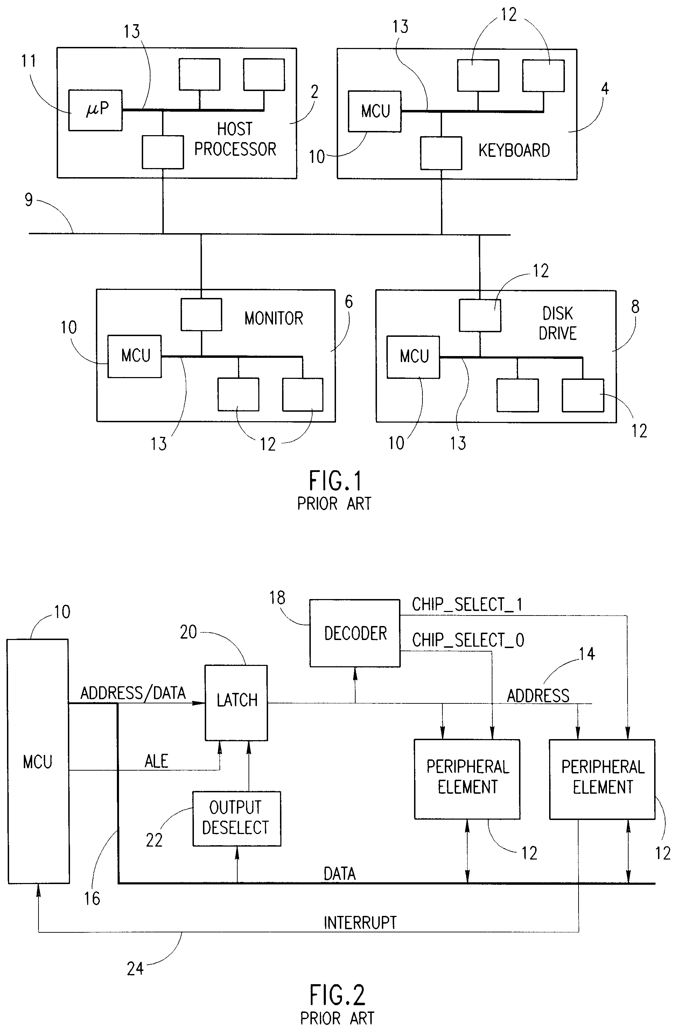

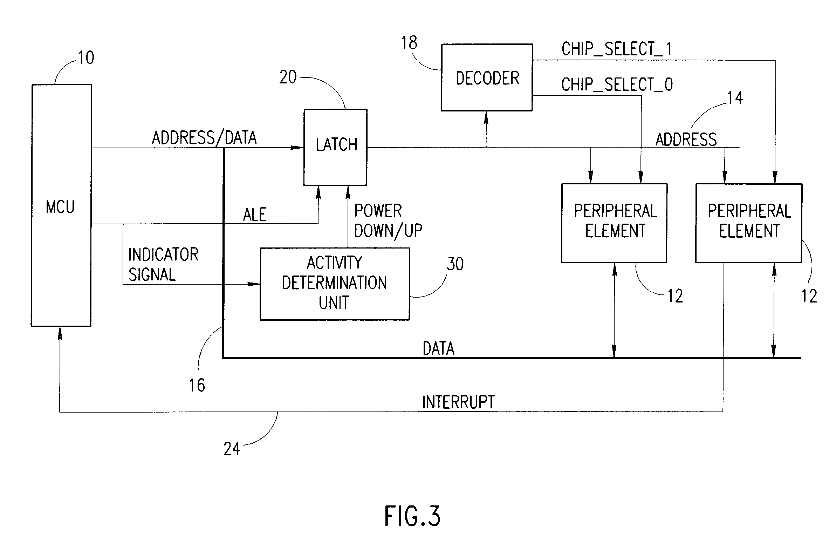

Most prior art portable systems comprise at least a host processor operating in conjunction with a plurality of peripheral elements. An example prior art portable computer is illustrated in Fig. 1, to which reference is now made. Reference is also made to Fig. 2 which illustrates a prior art local controller system.

The prior art portable computer comprises a plurality of system elements, such as a host processor 2 and a plurality of peripheral devices, such as a keyboard 4, monitor 6 and disk drive 8. The peripheral devices are connected to the host processor 2 via a system bus 9, such as the AT bus.

Each system element typically comprises a microcontroller unit (MCU) 10 (or a microprocessor 11 in the case of the host processor 2) and a plurality of peripheral elements 12 connected together via a local bus 13. Peripheral elements 12 are typically single chip elements,such as memories, I/O ports, timers, etc..

An exemplary system element is detailed in Fig. 2. It comprises MCU 10, the local bus 13, shown as an address bus 14 and a data bus 16, a plurality of peripheral elements 12, an address decoder 18 and an address latch 20.

The host processor 2 typically controls the operation of the system as a whole and the individual MCUs 10 control the operation of the specific peripheral device. Thus, if the host processor 2 sends a message such as "read register 3245" to the disk drive 8, the MCU 10 of disk drive 8 will cause the requested action to occur.

As is known in the art, as the number of components in each system increases, the power consumption of the system increases. In order to minimize power consumption, microprocessor 11, MCUs 10 and peripheral elements 12 have been provided with two modes, an operating mode, during which the system elements perform their functions and a "standby" mode during which no function is performed. An optional third "sleep" mode is often also provided in which reference signals are switched off, further reducing power consumption.

Power saving modes of the 87C51GB microcontroller, manufactured by Intel Corporation of the USA, are described on pages 9-49 - 9-51 of the book, Embedded Microcontrollers and Processors, Vol. 1, by Intel, 1992.

In the operating mode, the currently operating system elements consume power (in the range of milliamps) whereas in the standby mode, the system elements consume little power (in the range of microamps). In the optional sleep mode, the system elements consume even less power (less than 1 microamp).

The system switches out of the standby mode and into the operating mode whenever it receives, via one of the peripheral devices, an action request from a user. For example, an action request might be a keytype or a ringing on a telephone line.

During the operating mode, the host processor 2 provides commands to the various peripheral devices. The MCU 10 of the addressed peripheral device typically responds by commanding its peripheral elements 12 to provide information or perform some function.

The peripheral elements 12 are accessed by providing data on the data bus 16 and address information on the address bus 14, often latched by latch 20 upon receipt of an address_latch_enable (ALE) signal. Based on the address information, the decoder 18 selects, via a chip_select_X signal, the peripheral element 12 being addressed. During a write cycle, the peripheral element 12 receives the data sent to it via the data bus 16. During the next read cycle, the peripheral element 12 typically sends data to the MCU 10 via the data bus 16.

If the microcontroller 10 is operating with one peripheral element 12 and, at the same time, a second peripheral element 12 receives an action request, the second peripheral element 12 typically indicates this fact by sending a signal to the MCU 10 on an associated interrupt line 24. The MCU 10 responds by stopping everything and immediately performing an interrupt program listing the operations to be performed upon receiving an interrupt signal from the second peripheral element 12. To perform the interrupt program, the MCU 10 must first access an "interrupt" location in a memory device (one of the peripheral elements 12) to retrieve the interrupt program. The MCU 10 evaluates the interrupt and, if necessary, sends an interrupt signal to the host processor 2 which, in turn, performs an interrupt program.

It is noted that only those peripherals which receive action requests have interrupt lines.

In one prior art system, when the standby mode is selected, the microprocessor 10 freezes all bus activity and then becomes idle. However, freezing bus activity typically leaves a valid chip_select signal on the address bus which can cause one of peripheral elements 12 to be active. This is undesirable.

One solution has been to add an output deselect 22. In this alternative system, when the standby mode is selected, the microprocessor 10 sends an output "deselect" command on the data bus 16 and then powers down to the standby mode.

Upon receipt of the deselect command, the output deselect 22 provides a "power down" signal to the decoder 18, via the latch 20. The power down signal indicates that decoder 18 should "deselect" all the peripheral elements, thereby disconnecting them from the MCU 10, as well as powering down itself. Typically, each peripheral element 12 also has its own power down circuitry which is activated when a deselect command is received.

In the standby mode, as in the operating mode, when a peripheral element 12 receives an action request, such as described hereinabove, it sends an interrupt signal to the MCU 10, causing the MCU 10 to return to the operating mode. The MCU 10 should then access the corresponding interrupt memory location. However, the MCU 10 cannot do so since the peripheral elements 12 have been disconnected. Therefore, when the MCU 10 is in standby mode, any interrupt signal typically first causes a "reset" of the MCU 10 and of the output deselect 22 which, in turn, causes the decoder 18 to return to operation thereby reconnecting the peripheral elements 12. Only once the reset operation is complete, can the MCU 10 respond to the interrupt signal.

As is known in the art, performing a reset operation is undesirable as it takes a significant amount of time, on the order of milliseconds, it causes the MCU 10 to lose information about its current operations (its state), and often draws a lot of battery power.

U.S. Patent 4,980,836 describes apparatus for reducing computer system power consumption. It monitors the system bus 9 to determine when a selected group of peripheral devices has not been accessed for a preset amount of time, at which point it causes a power down of the computer system. The computer system is returned to the operating mode by depressing a standby switch.

It is noted that U.S. Patent 4,980,836 does not utilize the power down modes described hereinabove. Instead, it uses an external sleep signal to disable the clock input to the microprocessor, thereby stopping the operation of the microprocessor and reducing its power consumption. This solution can not be used in many applications because most microprocessors 11 require input of a minimum clock frequency even when they are powered down.

Furthermore, in U.S. '836 the sleep signal can only be provided when the microprocessor is not in the middle of an instruction fetch or execution of an instruction. This entails additional circuitry. Also, the return from the sleep state has to be stepped such that the system elements are operative before the microprocessor begins operating.

Finally, U.S. '836 does not address the problem of microprocessors which leave valid address on the system bus 9 nor does it address the problem of resetting the MCU 10 or microprocessor 11.

It is desired to have a more automatic power down and power up system which does not require a reset operation for power up.

### SUMMARY OF THE PRESENT INVENTION

It is therefore an object of the present invention to provide an improved mode of power down and power up.

Applicants have realized that, during typical operation, a microcontroller unit or a microprocessor produces signals which approximately indicate its operating status. These signals are those control signals which are quite active when the microcontroller (microprocessor) is operating, typically occurring on every clock cycle or on every predefined number of clock cycles. However, these signals are not active when the microcontroller is in standby mode. Exemplary indicator signals are the address latch enable (ALE) signal and the read and write signals.

Therefore, there is provided, in accordance with a preferred embodiment of the present invention, an automatic power down and power up unit which is controlled by the absence or presence, respectively, of activity in the control signals. No reset operation is required to return to the operating mode from the standby or sleep modes.

Additionally, in accordance with a preferred embodiment of the present invention, the unit includes a counter receiving both the control signal and a clock signal for counting a predetermined number of clock cycles starting from when the control signal ceases activity and for producing a power down indication once the predetermined number of clock cycles have been counted. Preferably, the counter includes a reset unit for producing a power up indication once the control signal regains activity.

Moreover, in accordance with a preferred embodiment of the present invention, the unit includes at least one power down unit for blocking the clock signal when the power down indication is received.

Additionally, in accordance with a preferred embodiment of the present invention, the unit of the present invention includes a sleep mode unit for bringing the peripheral elements into the sleep mode when the power down indication is received.

The invention also incorporates the method of utilizing the power down/power up unit. Specifically, in accordance with the present invention, there is provided a method for powering up and powering down at least one peripheral element including the step of transforming a generally very active control signal into a power up/power down signal for the peripheral element.

Preferably, in accordance with the present invention, the step of transforming includes the steps of receiving said control signal and a clock signal, counting a predetermined number of clock cycles starting from when said control signal ceases activity and producing a power down indication once the predetermined number of clock cycles have been counted.

### BRIEF DESCRIPTION OF THE DRAWINGS

The present invention will be understood and appreciated more fully from the following detailed description taken in conjunction with the drawings in which:
Fig. 1 is a schematic illustration of a prior art portable computer system;
Fig. 2 is a schematic illustration of a prior art microcontroller system, typically forming part of the computer system of Fig. 1;
Fig. 3 is a schematic illustration of a microcontroller system having an automatic power down and power up circuit, constructed and operative in accordance with a preferred embodiment of the present invention; and
Fig. 4 is a circuit diagram illustration of the automatic power down and power up device of Fig. 3.

### DETAILED DESCRIPTION OF A PREFERRED EMBODIMENT

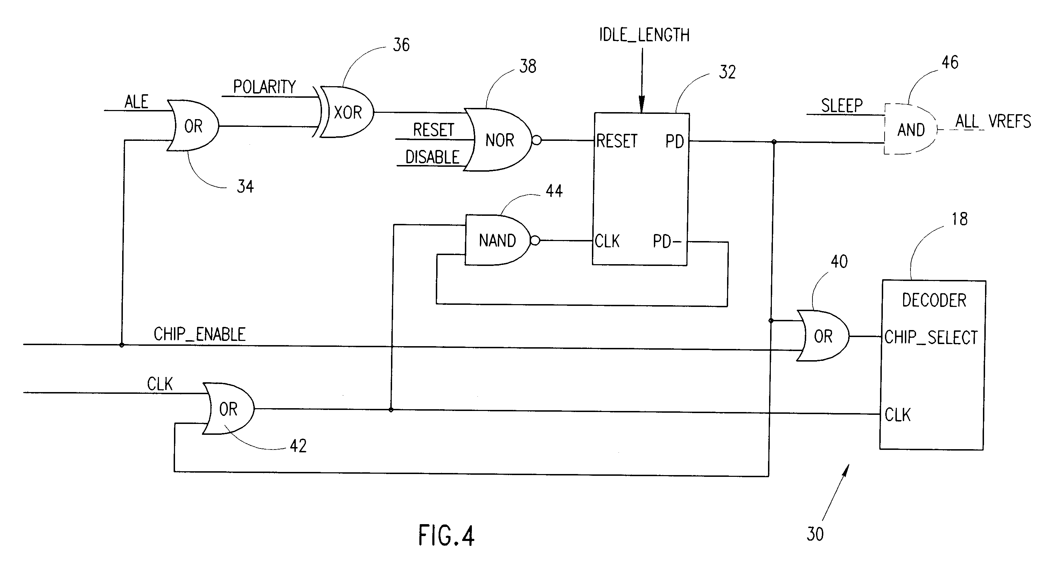

Reference is now made to Figs. 3 and 4. Fig. 3 illustrates a microcontroller (or microprocessor) system having an automatic power down and power up device constructed and operative in accordance with a preferred embodiment of the present invention and Fig. 4 details, in circuit diagram format, the elements of an exemplary device.

The automatic power down and power up device typically comprises an activity determination unit 30 which monitors the activity of a selected indicator signal and deselects the decoder 18 when the selected indicator signal has had no activity during a user-determined length of time. The lack of activity indicates that the MCU 10 has switched into standby mode. The indicator signal is typically a control signal wherein, in the exemplary device shown in Fig. 3, the indicator signal is the address latch enable (ALE) signal for which a typical length of no-activity is four clock cycles.

In the system of Fig. 3, when the MCU 10 receives an interrupt signal 24, the MCU 10 sends signals, one of which is the selected indicator signal, on the address and data busses 14 and 16 in order to access the interrupt program stored in the memory (one of the peripheral elements 12). The indicator signal reaches the activity determination unit 30 which, in response to the new activity "undeselects" or "reselects" the decoder 18. The system is now ready to operate.

Thus, the automatic power down and power up device of the present invention powers down the peripheral elements 12 shortly after the MCU 10 switches into standby mode and powers up the peripheral elements 12 as soon as the MCU 10 switches back to the operating mode.

It is a feature of the present invention that it provides power down and power up in response to two states of a single signal and that the power up operation is generally the inverse of the power down operation. This is in contrast to the prior art which powers down by a deselect operation and powers up by a reset operation. Furthermore, as will be seen hereinbelow, there is little access time penalty in powering up or down.

Further features of the present invention will be evident from the following description in which Fig. 4 illustrates one embodiment.

Unit 30 typically comprises a counter 32 for counting the number of clock cycles during which no activity has occurred and a plurality of logic devices 34 - 40 for providing an input signal to the counter 32 and for responding to its output.

Unit 30 receives three signals, the ALE signal, a clock (CLK) signal and a chip_enable signal, the latter of which serves to override the operation of unit 30. Unit 30 operates as follows:

The active one of the ALE and chip_enable signals is provided by OR block 34 to XOR block 36. XOR block 36 additionally receives a user-definable POLARITY configuration signal indicating whether, when the MCU 10 is in standby mode, the ALE signal is high or low (i.e. by which state does the ALE signal indicate lack of activity or the "power down" state). The output of the XOR block 36 indicates whether or not the MCU 10 is powered down.

The following signals are provided to NOR block 38: the output of the XOR block 36 and two external signals, a RESET signal indicating that a reset of the MCU 10 has taken place outside of the unit 30 and a DISABLE signal, indicating that the power down unit 30 should be disabled.

If the RESET and DISABLE signals are not active and the ALE signal is in the power down state, the output of the NOR block 38 causes counter 32 to begin counting clock periods provided to its "CLK" input location. Otherwise, the output of NOR block 38 resets counter 32.

If counter 32 has counted IDLE_LENGTH clock periods, it provides power down signals on its PD and PD_ (inverse of PD) output locations. The configuration parameter IDLE_LENGTH is user determinable.

The power down signal, via OR block 40, is provided to the chip select location of decoder 18 or of any other peripheral element controller such as a programmable logic device (PLD) of a programmable system device (PSD). If either of the power down or chip_enable signals indicate powering down, the decoder 18 ceases activity.

As is known in the art, when the MCU 10 returns to the operating mode, it immediately performs a number of actions, among which is providing an ALE signal. For example, if the MCU 10 receives an interrupt signal, its first action is to access the interrupt memory location, which action requires an ALE signal.

The presence of activity on the ALE signal resets counter 32 and the power down signal ceases to be active, in effect becoming a power up signal. The power up signal is provided to OR block 40 which reselects the decoder 18, thereby powering up the peripheral elements 12, typically within 10nsec. As mentioned hereinabove, the device of the present invention provides power up and power down in response to two states of one signal.

Activity measuring unit 30 also typically comprises units for reducing its internal activities in the power down state. Such units are logic blocks 42 and 44.

OR block 42 replaces prior art clock buffers which utilize significant amounts of power even if the clock signal is not utilized. OR block 42 therefore comprises circuitry for performing a logical OR as well as clock input buffer elements. OR block 42 receives the power down signal and the CLK signal. If the power down signal is active (i.e. in the standby mode), OR block 42 does not provide the CLK signal to the decoder 18, thereby further reducing the activity of decoder 18. Furthermore, when in the standby mode, the logical OR elements of OR block 42 block power to the clock input buffer elements of block 42.

NAND block 44 also operates to reduce power consumption during the standby mode. NAND block 44 receives the CLK signal and the PD_ signal and outputs the CLK signal only when there is no power down signal. This keeps the counter 32 from operating when unit 30 is in the standby mode.

The power down signal can optionally also be provided to AND block 46 which also receives a user-defined SLEEP configuration signal indicating whether or not the user wants the system to go into the sleep mode and completely shut off whenever a power down signal is received. If so, the output of AND block 46 will cause all of the analog reference voltages, Vrefs, to be disconnected from their circuits. In this state, the MCU system is almost completely powered down and utilizes very little power. However, returning to the operating mode from the sleep mode typically takes a significant amount of time, on the order of 600nscc.

It will be appreciated that the present invention puts peripheral elements 12 into the standby mode shortly after MCU 10 goes into the standby mode and returns them to the operating mode as soon as MCU 10 powers up.

It will be appreciated that the indicator signal can alternatively be a READ or a WRITE signal without any concomitant changes in circuitry of unit 30. In these alternative embodiments, the values of some of the parameter signals are different. For example, IDLE_LENGTH is typically longer.

It will be appreciated by persons skilled in the art that the present invention is not limited to what has been particularly shown and described hereinabove. Rather the scope of the present invention is defined only by the claims which follow:

## Claims

1. Power up/power down apparatus which transforms a generally very active control signal into a power up/power down signal for at least one peripheral element.

2. Apparatus according to claim 1 and wherein said control signal is an address latch enable (ALE) signal.

3. Apparatus according to claim 1 and comprising a counter receiving said control signal and a clock signal for counting a predetermined number of clock cycles starting from when said control signal ceases activity and for producing a power down indication once said predetermined number of clock cycles have been counted.

4. Apparatus according to claim 3 and wherein said counter includes reset means for producing a power up indication once said control signal regains activity.

5. Apparatus according to claim 3 and additionally comprising at least one power down unit for blocking said clock signal when said power down indication is received.

6. Apparatus according to claim 3 and comprising a sleep mode unit for bringing the at least one peripheral element into sleep mode when said power down indication is received.

7. A method for powering up and powering down at least one peripheral element comprising the step of:
transforming a generally very active control signal into a power up/power down signal for said at least one peripheral element.

8. A method according to claim 7 and wherein said control signal is an address latch enable (ALE) signal.

9. A method according to claim 7 and wherein said step of transforming includes the steps of:
receiving said control signal and a clock signal;
counting a predetermined number of clock cycles starting from when said control signal ceases activity; and
producing a power down indication once said predetermined number of clock cycles have been counted.

10. A method according to claim 9 and wherein said step of transforming additionally includes the step of:
producing a power up indication once said control signal regains activity.

11. A method according to claim 9 and including the step of blocking said clock signal when said power down indication is received.

12. A method according to claim 9 and including the step of bringing the at least one peripheral element into a sleep mode when said power down indication is received.
